# EUROPEAN PATENT SPECIFICATION

(11) **EP 1 852 340 B1**
(45) Date of publication and mention of the grant of the patent: **01.04.2009**
(21) Application number: 07008502.2
(22) Date of filing: 26.04.2007
(51) Int. Cl.: B62J 15/02

(54) **Fastener particularly for a supporting rod and fender**
Halterung, insbesondere zum Halten von Stange und Kotflügel
Attache, en particulier pour fixer un tige et un garde-boue

(30) Priority: 05.05.2006 IT vi20060133
(43) Date of publication of application: 07.11.2007
(73) Proprietor: Passuello, Ivan, 31020 San Zenone Degli Ezzelini TV (IT)
(72) Inventor: Passuello, Ivan, 31020 San Zenone Degli Ezzelini TV (IT)
(74) Representative: Forattini, Amelia

(56) References cited:
- EP-A- 1 790 558
- EP-A2- 1 160 150
- GB-A- 2 383 314
- NL-C2- 1 022 857

## Description

The present invention relates to a fastener for a supporting rod and fender.

As is known, various types of fasteners are used for fastening fenders on bicycles by joining the fenders to the supporting rods that extend from the frame. The most elementary devices are constituted by simple straps riveted to the fenders and joined to the supporting rods by means of screws, while other less rudimentary devices are constituted by small clips, usually made of molded synthetic material, and formed substantially by two portions that are mutually pivoted and can be fastened by means of screws.

The main limitation of those devices resides in the need to use metallic screws, with all the consequent repercussions both from the functional standpoint and from the aesthetic standpoint.

Some of those drawbacks have been overcome by other types of fastening devices, constituted by a male body and a female body that are coupled to each other by screw or snap coupling, but despite allowing to engage the supporting rods without the aid of metallic screws, they force to apply specifically provided tabs beforehand to the fenders.

Those fastening devices also require additional metallic accessories to be provided on the fenders, affecting the total assembly time and consequently the costs. Also, their production generally requires particularly expensive molds, despite a final result which often is below technical and functional expectations.

Many of the drawbacks cited above have been recently solved by other fastening devices, made entirely of molded synthetic material and constituted by a male body and a female body that are coupled together by means of simple movements through a quarter turn, that allow to clamp the supporting rods and to couple the devices to the fenders without resorting to screws or metallic accessories.

EP-A-1790658 (date of publication 30.5.2007) discloses a fastening device for a mudguard and a support rod, of the above type, comprising a rotating fixation means.

However, although those devices perform their task in an optimum manner, they have a rather important limitation which is inherently linked to the fastening system that characterizes them. Because that type of device requires that fixing occurs by turning one of the two components about the supporting rod, their use must be excluded entirely at the outset when supporting rods having a noncircular cross-section are used.

In view of their specific use, it is also worth noting that the structural characteristics on which the fastening system of these devices is based impose severe constraints on the possible embodiments, considerably limiting the possibility to produce constructive variations that differ in terms of design but have the same technical content.

The aim of the present invention is to solve the problems described above, by providing a fastener particularly for a supporting rod and fender, which can be detachably engaged without the aid of screws or additional accessories simultaneously with a fender and with a supporting rod having any cross-sectional shape.

Within the scope of this aim, an object of the invention is to provide a fastener which can adjust the distance between the fender and the wheel with simple maneuvers.

Another object of the invention is to provide a fastener which, while ensuring solidity and safety, is simple and quick to apply without resorting to rivets, screws and particular tools.

Another object of the invention is to provide a fastener which can be produced at competitive costs and is advantageous from a purely economic standpoint.

This aim and these and other objects, which will become better apparent hereinafter, are achieved by a fastener for a supporting rod and fender, said fastener comprising a frame having a quick coupling means for detachably associating the frame with the fender, said fastener comprising a seat which slidingly accommodates a portion of the supporting rod, and a locking lever means, which is articulated at the seat in order to stop the relative sliding between the supporting rod and the frame in a fastening condition; said locking lever means comprising a lever which is articulated to said frame and whose axis of articulation lies transversely to said longitudinal axis of said seat.

Further characteristics and advantages will become better apparent from the following detailed description of preferred but not exclusive embodiments of a coupling according to the invention, illustrated by way of non-limiting example in the accompanying drawings, wherein:
Figure 1 is a perspective view of a fastener according to the invention in the fastening condition;
Figure 2 is another perspective view of the fastener according to the invention in the fastening condition;
Figure 3 is a cutout perspective view of the fastener according to the invention in the fastening condition;
Figure 4 is another perspective view of the fastener according to the invention in the fastening condition;
Figure 5 is a front view of the fastener according to the invention in the fastening condition;
Figure 6 is a side view of the fastener according to the invention in the fastening condition;
Figure 7 is a side view of a portion of the fastener according to the invention, in the fastening condition;
Figure 8 is a perspective view of a fastener according to a further aspect of the invention, in the fastening condition;
Figure 9 is a side view of the fastener of Figure 8;
Figure 10 is a sectional side view of the fastener of Figure 9.

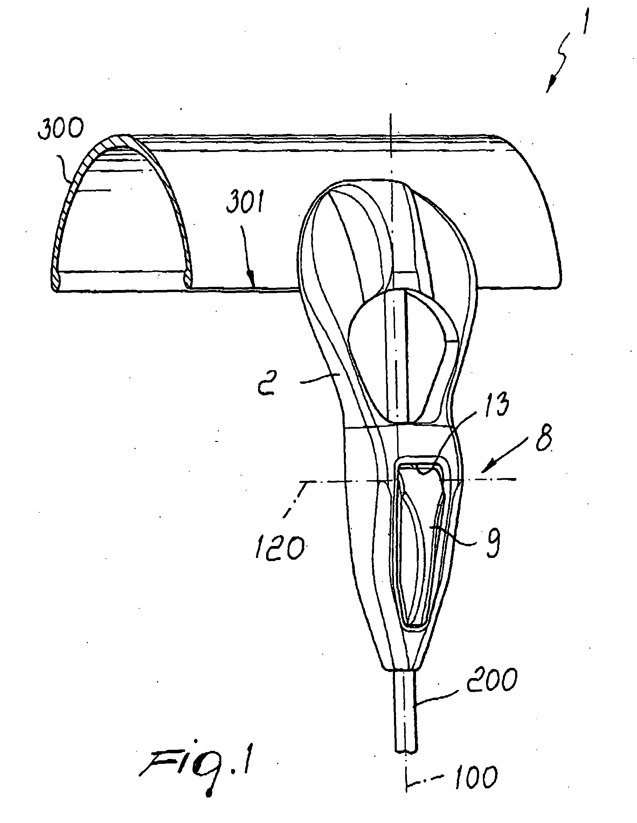

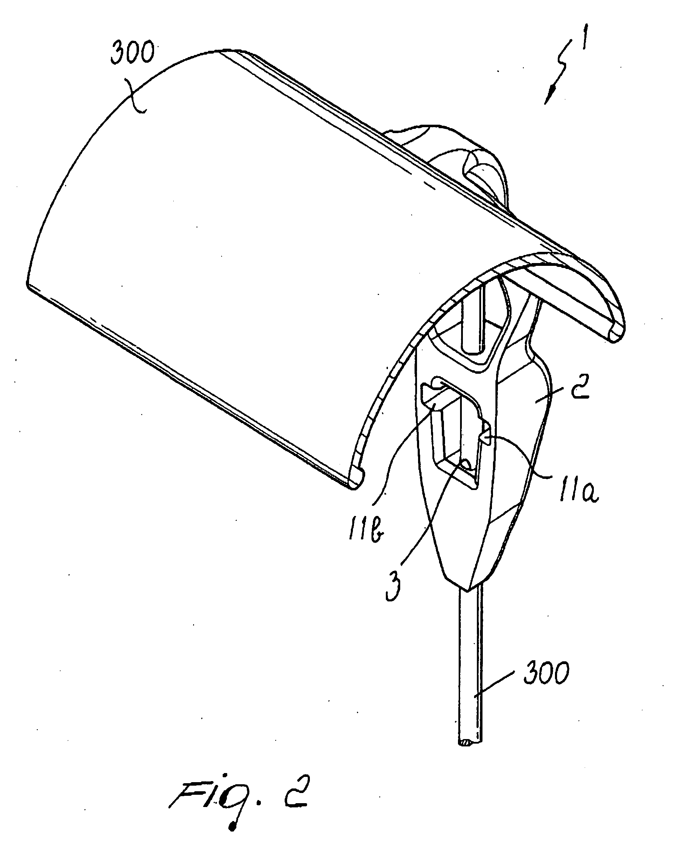

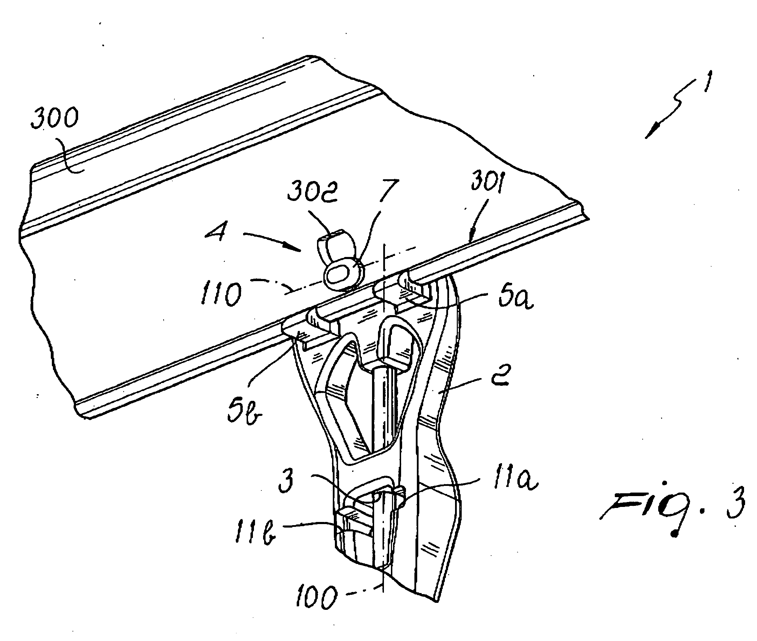

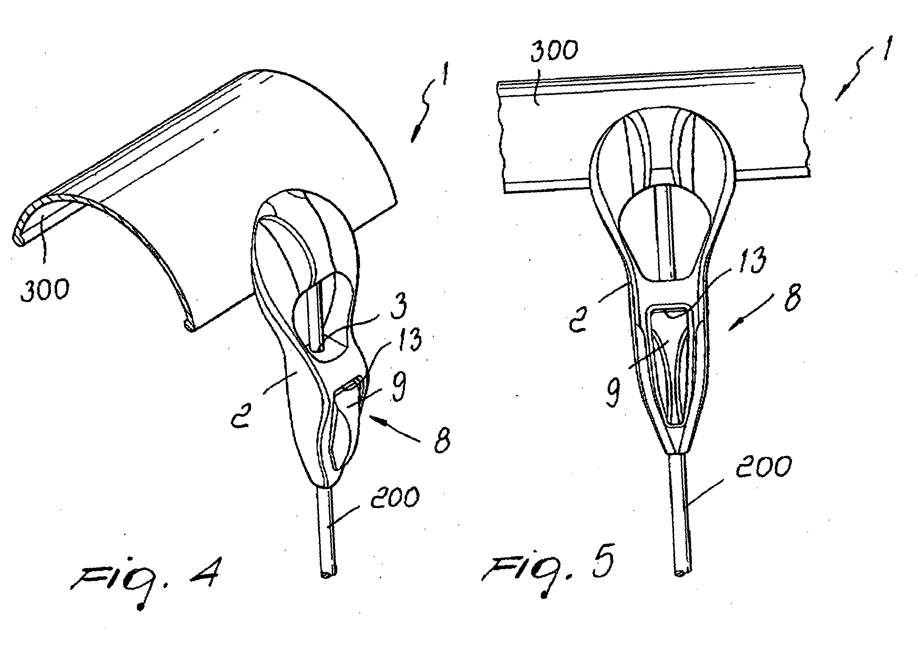

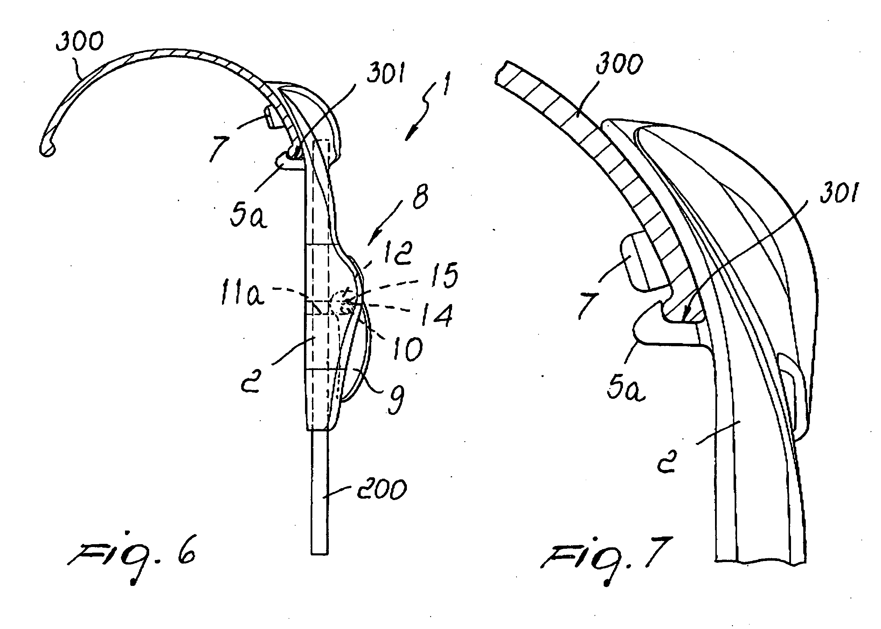

With reference to Figures 1 to 7, a fastener, generally designated by the reference numeral 1 and made for example of molded synthetic material, has a frame 2 in which there is a seat 3 which has a longitudinal axis of symmetry 100 and a shape suitable to slidingly accommodate a portion of a supporting rod 200 in a fastening condition.

The fastener has a quick coupling means 4, which allows to detachably associate the frame 2 with the fender 300. Such means is constituted by a hook 7 and two abutment teeth 5a and 5b, that are formed monolithically with the frame 2, transversely to the longitudinal axis of symmetry 100, so as to interact with the lateral edge 301 of the fender 300. The hook 7 is formed by an ellipsoidal head, with an axis 110 which lies transversely to the longitudinal axis of symmetry 100, and by a stem, which is joined monolithically to the frame 2. In a fastening condition, the hook 7 interacts with a plurality of contoured slots 302 formed at the lateral edge 301 and substantially T-shaped. The portion that lies parallel to the lateral edge 301 is shaped substantially complementarily to the profile of the ellipsoidal head, so as to allow its passage, and the portion arranged transversely to the lateral edge 301 is shaped complementarily to the stem.

A locking lever means 8 is articulated at the seat 3 and prevents the relative sliding between the supporting rod 200 and the frame 2, in the fastening condition. Namely, a lever 9 is articulated to the frame 2, with an axis of articulation 120 which lies transversely to the longitudinal axis of symmetry 100, by means of a pivot 10, which is formed monolithically at the axis of articulation 120 and is accommodated in two guides 11 a and 11 b formed on the frame 2 so as to contrast any thrusts. The lever 9 is provided with an eccentric head 12, which is formed at the axis of rotation 120 so as to apply its maximum compressive action to the supporting rod 200, in the fastening condition, in which the lever 9 is substantially parallel to the longitudinal axis of symmetry 100 and is accommodated within a recess 13.

When the lever 9 is in the fastening condition, its unintended rotation is prevented by the presence of a pawl 14, which is formed on the pivot 10 so as to interfere with an incision 15 formed inside the corresponding guide 11.

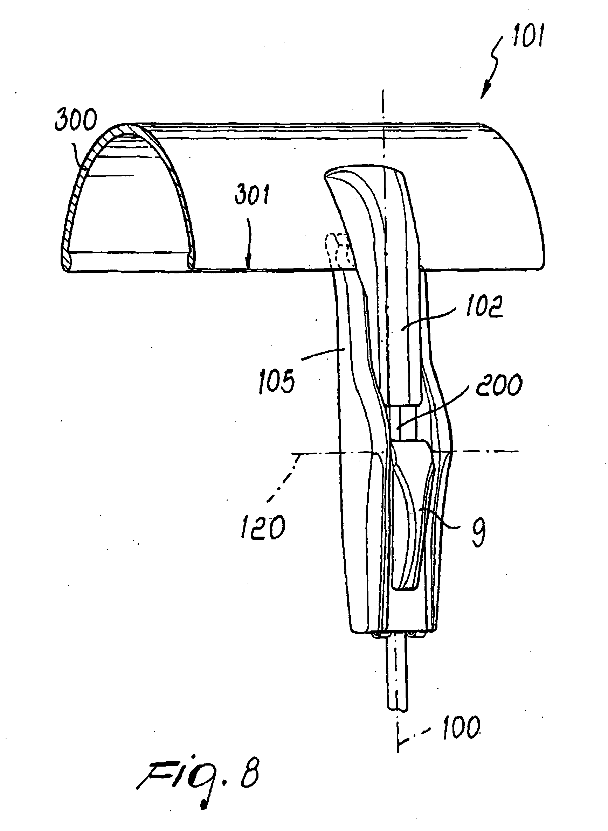

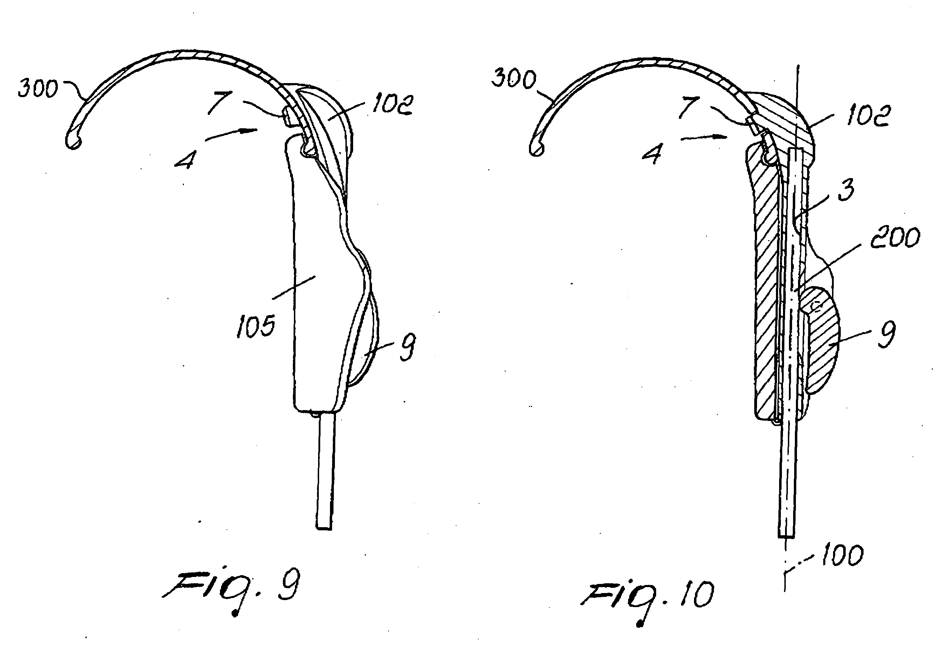

According to a further aspect of the invention, the fastener, designated by the reference numeral 101 and shown in Figures 8 to 10, has the abutment teeth 5a and 5b replaced by a claw member 105, which is joined monolithically to the frame 102. Namely, the claw member 105 is pivoted in a lower region with respect to the frame 102, on which it can close by pivoting along one edge, clamping the lateral edge 301, and acts as a support for the lever 9, which is articulated thereto with an articulation axis 120 which lies transversely to the longitudinal axis of symmetry 100.

In the embodiment shown in Figures 8 to 10, the members that correspond to the members already described with reference to the embodiment shown in Figures 1 to 7 have been designated by the same reference numerals.

The operation of the fastener according to the invention is as follows.

The fastener 1 is joined to the fender 300 by inserting the ellipsoidal head of the hook 7 in one of the contoured slots 302 and by making the rigid stem slide in the portion of the contoured slot 302 that lies transversely to the lateral edge 301, until the abutment teeth 5a and 5b engage with a snap action the lateral edge.

Subsequently, taking care to keep the lever 9 transversely to the longitudinal axis of symmetry 100, a portion of the supporting rod 200 is inserted in the seat 3, adjusting its insertion depth and changing accordingly the distance between the fender and the wheel. The supporting rod 200 is detachably joined to the fastener 1, subsequently moving the lever 9 into a position which is substantially parallel to the longitudinal axis of symmetry 100 so as to rest it in the recess 13. With the rotation of the lever 9, the eccentric head 12 applies a compressive action to the supporting rod 200, preventing its relative sliding with respect to the frame 2 and thus retaining it within the seat 3, while the pawl 14 enters with a snap action the incision 15 and prevents inadvertent rotations of the lever 9.

The adjustment of the correct distance between the fender 300 and the wheel or the disassembly of the entire fastener 1 can be achieved very simply by returning the lever 9 to a position which lies transversely to the longitudinal axis of symmetry 100 and by accordingly adjusting the depth of insertion of the supporting rod 200 in the seat 3.

The operation of the embodiment shown in figures 8-10 is substantially similar to the one described above; the only difference is that, instead of engaging with a snap action the lateral edge 301 and the abutment teeth 5a and 5b, the latter is clamped with the claw member 105. Specifically, the rotation of the lever 9 in a position which is substantially parallel to the longitudinal axis of symmetry 100, allows the eccentric head 12 to apply a compressive action to the supporting rod 200, preventing its relative sliding with respect to the frame 102 and thus retaining it within the seat 3, closes the claw member 105 onto the frame 102, allowing to clamp the lateral edge 301 during the fastening condition.

In practice it has been found that the fastener according to the invention fully achieves the intended aim and objects, since it can be engaged detachably simultaneously with a fender and with a supporting rod having any cross-section, without resorting to screws or other accessories.

The fastener according to the invention allows to adjust the distance between the fender and the wheel, and it is simple and quick to apply and can be produced with low costs.

## Claims

1. A fastener for a supporting rod and fender, said fastener (1) comprising a frame (2) which comprises a quick coupling means (4) for detachably associating said frame with said fender, said fastener comprising a seat (3) which slidingly accommodates a portion of said supporting rod (200) and a locking lever means, which is articulated at said seat (3) in order to stop the relative sliding between said supporting rod (200) and said frame (2) in a fastening condition; said locking lever means comprising a lever (9) which is articulated to said frame (2) and whose axis of articulation (120) lies transversely to said longitudinal axis of said seat (3).

2. The fastener according to claim 1, wherein said quick coupling means (4) comprises at least one hook (7) which comprises an elliptical head which is monolithic with a stem which is joined to said frame, the longitudinal axis of said ellipsoidal head being arranged transversely to the longitudinal axis of said seat (3).

3. The fastener according to one or more of the preceding claims, wherein said fender comprises a plurality of contoured slots (302), that are substantially T-shaped and formed proximate to its lateral edge (301), the portion of each of said contoured slots (302) that is substantially parallel to said lateral edge (301) being shaped substantially complementarily to the profile of said ellipsoidal head, the portion of each of said contoured slots (302) that lies transversely to said lateral edge (301) being shaped substantially complementarily with respect to the profile of said stem.

4. The fastener according to one or more of the preceding claims, wherein said quick coupling means (4) comprise at least one abutment tooth, which is formed transversely to said longitudinal axis of said seat (3), in order to interact with said lateral edge (301).

5. The fastener according to one or more of the preceding claims, wherein said lever comprises an eccentric head (12), which is formed monolithically with said lever (9) at said axis of articulation (120), said eccentric head (12) compressing said supporting rod (200), during said fastening condition, in order to stop the relative sliding between said supporting rod (200) and said frame (2).

6. The fastener according to one or more of the preceding claims, wherein said locking lever means comprises a pivot (10) which substantially coincides with said axis of rotation and can be associated with two guides (11a, 11b) formed on said frame (2), transversely to said longitudinal axis of said seat (3).

7. The fastener according to claim 6, wherein said locking lever means comprises at least one pawl (14), which is formed on said pivot, and at least one substantially complementary incision (15) which is formed inside said guides, said incision (15) accommodating said pawl (14) in said fastening condition.

8. The fastener according to one or more of the preceding claims, wherein said quick coupling means (4) comprises a claw member (105) which is connected to said frame (102) in a lower region by means of a hinge and can be closed onto said frame in order to clamp said lateral edge, said lever (9) being articulated to said claw member with an articulation axis which lies transversely to said longitudinal axis of said seat.

## Patentansprüche

1. Halterung zum Halten einer Stange und eines Kotflügels, wobei die Halterung (1) einen Rahmen (2) umfasst, der ein Schnellkupplungsmittel (4) zum lösbaren Verbinden des Rahmens mit dem Kotflügel umfasst, wobei die Halterung einen Sitz (3), der einen Teil der Haltestange (200) verschiebbar aufnimmt, und ein Verriegelungshebelmittel umfasst, das an dem Sitz (3) angelenkt ist, um die relative Verschiebung zwischen der Haltestange (200) und dem Rahmen (2) in einem Halterungszustand anzuhalten, wobei das Verriegelungshebelmittel einen Hebel (9) umfasst, der an dem Rahmen (2) angelenkt ist und dessen Gelenkachse (120) quer zur Längsachse des Sitzes (3) liegt.

2. Halterung nach Anspruch 1, wobei das Schnellkupplungsmittel (4) mindestens einen Haken (7) umfasst, der einen elliptischen Kopf aufweist, welcher einstückig mit einem mit dem Rahmen verbundenen Schaft ausgebildet ist, wobei die Längsachse des elliptischen Kopfs quer zur Längsachse des Sitzes (3) angeordnet ist.

3. Halterung nach einem oder mehreren der vorhergehenden Ansprüche, wobei der Kotflügel mehrere konturierte Schlitze (302) umfasst, die im Wesentlichen T-förmig sind und nahe seines Seitenrands (301) ausgebildet sind, wobei der Teil jedes der konturierten Schlitze (300), der sich im Wesentlichen parallel zu dem Seitenrand (301) erstreckt, im Wesentlichen komplementär zu dem Profil des elliptischen Kopfs ausgebildet ist, wobei der Teil jedes der konturierten Schlitze (302), der quer zu dem Seitenrand (301) liegt, im Wesentlichen komplementär zu dem Profil des Schafts ausgebildet ist.

4. Halterung nach einem oder mehreren der vorhergehenden Ansprüche, wobei das Schnellkupplungsmittel (4) mindestens einen Anlagezahn umfasst, der quer zu der Längsachse des Sitzes (3) ausgebildet ist, um mit dem Seitenrand (301) zusammenzuwirken.

5. Halterung nach einem oder mehreren der vorhergehenden Ansprüche, wobei der Hebel einen exzentrischen Kopf (12) umfasst, der einstückig mit dem Hebel (9) an der Gelenkachse (120) ausgebildet ist, wobei der exzentrische Kopf (12) die Haltestange (200) während des Halterungszustands zusammendrückt, um die relative Verschiebung zwischen der Haltestange (200) und dem Rahmen (2) anzuhalten.

6. Halterung nach einem oder mehreren der vorhergehenden Ansprüche, wobei das Verriegelungshebelmittel einen Drehzapfen (10) umfasst, der im Wesentlichen mit der Drehachse zusammenfällt und mit zwei Führungen (11a, 11b) verbunden werden kann, die an dem Rahmen (2) quer zur Längsachse des Sitzes (3) ausgebildet sind.

7. Halterung nach Anspruch 6, wobei das Verriegelungshebelmittel mindestens eine Sperrklinke (14), die an dem Drehzapfen ausgebildet ist, und mindestens einen im Wesentlichen komplementären Einschnitt (15), der in den Führungen ausgebildet ist, umfasst, wobei der Einschnitt (15) die Sperrklinke (14) im Halterungszustand aufnimmt.

8. Halterung nach einem oder mehreren der vorhergehenden Ansprüche, wobei das Schnellkupplungsmittel (4) ein Klauenglied (105) umfasst, das in einem unteren Bereich mittels eines Scharniers mit dem Rahmen (102) verbunden ist und an den Rahmen geschlossen werden kann, um den Seitenrand einzuklemmen, wobei der Hebel (9) mit einer Gelenkachse an das Klauenglied angelenkt ist, die quer zur Längsachse des Sitzes liegt.

## Revendications

1. Attache pour fixer une tige de support à un garde boue, ladite attache (1) comprenant un cadre (2) muni d'un moyen d'accouplement rapide (4) permettant de solidariser de manière amovible ledit cadre audit garde boue, ladite attache comprenant une embase (3) qui reçoit de manière coulissante une partie de ladite tige de support (200) et un moyen de levier de blocage, qui est articulé à ladite embase (3) pour arrêter le coulissement relatif entre ladite tige de support (200) et ledit cadre (2) dans un état de fixation ; ledit moyen de levier de blocage comprenant un levier (9) qui est articulé audit cadre (2) et dont l'axe d'articulation (120) est transversal audit axe longitudinal dudit siège (3).

2. Attache selon la revendication 1, dans laquelle ledit moyen d'accouplement rapide (4) comprend au moins un crochet (7) qui comporte une tête elliptique qui est d'une seule pièce avec une tige reliée audit cadre, l'axe longitudinal de ladite tête elliptique étant disposé transversalement à l'axe longitudinal de ladite embase (3).

3. Attache selon une ou plusieurs des revendications précédentes, dans laquelle ledit garde boue comprend une pluralité d'encoches en forme (302), qui sont sensiblement en forme de T et disposées à proximité de son bord latéral (301) ; la partie de chacune des dites encoches en forme (302) qui est sensiblement parallèle audit bord latéral (301) ayant une forme sensiblement complémentaire au profil de ladite tête elliptique, la partie de chacune des dites encoches en forme (302) qui est transversale audit bord latéral (301) ayant une forme sensiblement complémentaire au profil de ladite tige.

4. Attache selon une ou plusieurs des revendications précédentes, dans laquelle ledit dispositif d'accouplement rapide (4) comprend au moins une dent d'aboutement qui est formée transversalement audit axe longitudinal de ladite embase (3), afin d'interagir avec ledit bord latéral (301).

5. Attache selon une ou plusieurs des revendications précédentes, dans laquelle ledit levier comprend une tête à excentrique (12) qui est formée d'une seule pièce avec ledit levier (9) au niveau dudit axe d'articulation (120), ladite tête à excentrique (12) comprimant ladite tige de support (200) pendant ledit état de fixation, afin d'arrêter le coulissement relatif entre ladite tige de support (200) et ledit cadre (2).

6. Attache selon une ou plusieurs des revendications précédentes, dans laquelle ledit moyen de levier de blocage comprend un pivot (10) qui coïncide sensiblement avec ledit axe de rotation et qui peut être associé avec deux guides (11a, 11b) formés sur ledit cadre (2), transversalement audit axe longitudinal de ladite embase (3).

7. Attache selon la revendication 6, dans laquelle ledit moyen de levier de blocage comprend au moins un cliquet (14) qui est formé sur ledit pivot, et au moins une incision (15) sensiblement complémentaire qui est formée à l'intérieur des dits guides, ladite incision (15) recevant ledit cliquet (14) dans ledit état de fixation.

8. Attache selon une ou plusieurs des revendications précédentes, dans laquelle ledit moyen d'accouplement rapide (4) comprend un élément en fourche (105) qui est connecté audit cadre (102) dans une région inférieure au moyen d'une articulation et qui peut être fermé sur ledit cadre pour verrouiller ledit bord latéral, ledit levier (9) étant articulé sur ledit élément en fourche avec un axe d'articulation qui est transversal audit axe longitudinal de ladite embase.
